# EUROPEAN PATENT SPECIFICATION

(11) **EP 2 926 010 B1**
(45) Date of publication and mention of the grant of the patent: **08.05.2019**
(21) Application number: 13801738.9
(22) Date of filing: 17.09.2013
(51) Int. Cl.: F04D 15/00, F04D 29/06, F04D 29/62, F01P 5/10, F01P 7/14, F16K 27/06

(54) **CARTRIDGE (EXTRACTABLE) VALVE TO BE MOUNTED IN A COOLANT PUMP DISCHARGE WITH AN IMPROVED SEAL BETWEEN THE VALVE AND THE PUMP CASING**
AUSWECHSELBARES VENTIL ZUM EINBAU IN EINEM KÜHLMITTEL-PUMPENAUSLASS MIT VERBESSERTER DICHTUNG ZWISCHEN DEM VENTIL UND DEM PUMPENGEHÄUSE
VANNE EXTRACTIBLE DESTINÉE AU MONTAGE DANS UNE SORTIE DE POMPE DE LIQUIDE DE REFROIDISSEMENT AVEC JOINT AMÉLIORÉ ENTRE LA VANNE ET LE CARTER DE POMPE

(30) Priority: 27.11.2012 IT BS20120165
(43) Date of publication of application: 07.10.2015
(73) Proprietor: Industrie Saleri Italo S.P.A., 25065 Lumezzane, Brescia (IT)
(72) Inventor: TEBALDINI, Giovanni, 25065 Lumezzane, Brescia (IT)
(74) Representative: Pulieri, Gianluca Antonio
(86) International application number: PCT/IB2013/058606
(87) International publication number: WO 2014/083441

(56) References cited:
- EP-A1- 0 362 918
- WO-A1-2011/095907
- DE-U1- 20 017 044

## Description

The present invention relates to a valve group for a pump of a cooling circuit, in particular for vehicles, such as motor vehicles or motorcycles.

It is well known how the cooling pump and the components, which compose it, are the most important elements inside the cooling circuit for thermic engines, especially in the vehicles sphere. Great attention is therefore paid to the correct design of such components and to the continual improvement of their performance.

Examples of cooling pumps are illustrated in the documents EP-A1-1503083, WO 2010/146609 A1, WO 2011/095907 A1, and BS2012A000153 (alias IT-BS20120153) in the name of the Applicant.

In particular within the sphere of the documents WO 2010/146609 A1, WO 2011/095907 A1, and BS2012A000153 (alias IT-BS20120153), the obturator positioned downstream of the rotor assumes an essential role; moreover, within the sphere of the documents WO 2011/095907 A1 and BS2012A000153 (alias IT-BS20120153), the fact that the valve group is extractable such as a cartridge from the pump also acquires particular importance.

Said embodiments, typical of the prior art, are spoiled by the fact of not efficiently obstructing the passage of cooling liquid, specifically, in the zones between the valve group itself and the pump. One of the main problems of this type of product is in fact that of avoiding the leakage of cooling liquid between the valve group and pump.

The purpose of the present invention is to make a valve group particularly suitable for use in the sphere of a cooling pump, comprising a specific anti-leakage projection which minimises as far as eliminating leakage of the cooling liquid between the valve group and pump.

Such purpose is achieved by a valve group made according to claim 1.

Throughout the specification, the use of the word "embodiment" in relation with some subject-matter does not imply that this subject-matter is part of the scope of protection of the patent. When an example illustrates the scope of protection, it will be referred to as "embodiment of the invention".

The characteristics and advantages of the valve group according to the present invention will be evident from the description given below, by way of a nonlimiting example, according to the appended drawings, wherein:
- figures 1a and 1b show a schematic view of a cooling pump comprising the valve group according to the present invention, according to an embodiment of the invention, respectively in an open configuration and in a closed configuration;

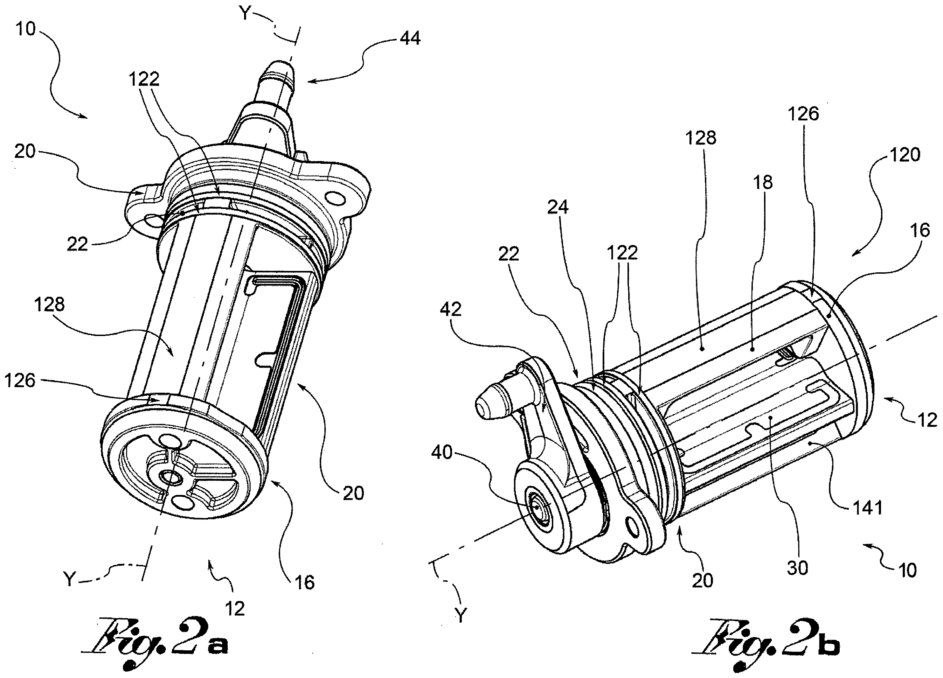

- figures 2a and 2b are two perspective views of the valve group according to the present invention, according to a further embodiment which is useful to understand the invention but which is not part of the invention as it does not include the characterising feature of the invention;

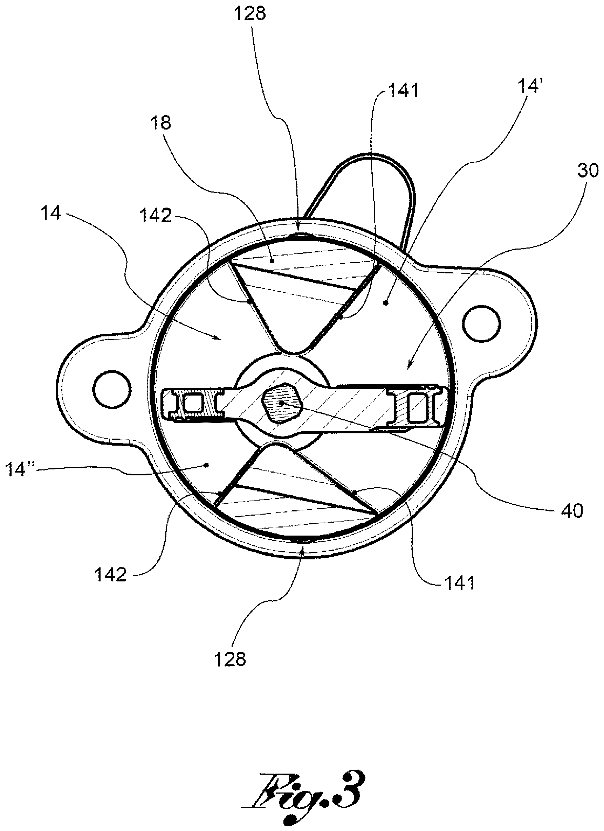

- figure 3 shows a transversal cross-section of the valve group shown in figure 2a;

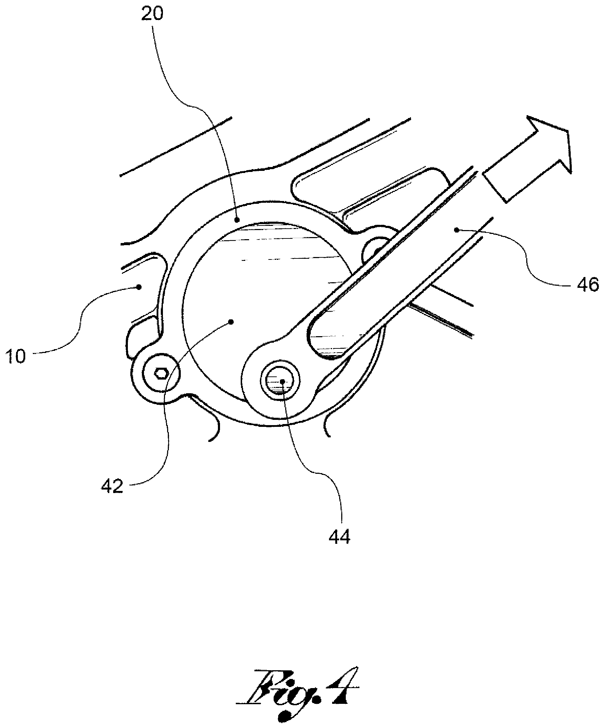

- figure 4 shows a detail of the pump containing the valve group according to the present invention.

According to one embodiment of the present invention, reference numeral 1 globally denotes a pump for a cooling circuit, in particular for vehicles, comprising a pump body 2 and a rotor 4 housed in the pump body 2, for example having a substantially circular shape. Preferably, the pump 1 is mechanically operated.

The pump body 2 is connectable to the cooling circuit of the motor, and in particular is connectable to a section of suction circuit, upstream, from which the liquid is aspirated, and a delivery section of circuit, downstream, to which the pressurised liquid is fed, towards the motor.

The rotor 4, placed in rotation around a rotor rotation axis, is suitable for aspirating the liquid from the suction section and sending it in pressurised form to the delivery section.

Downstream of the rotor, the pump body 2 has a delivery chamber 6, preferably having a volute profile, and a delivery duct 8, which extends from the delivery chamber 6. The delivery chamber 6 and the delivery duct 8 do not have any further openings towards further ducts, except for the opening of the delivery duct towards the downstream section of the cooling circuit.

In a preferred embodiment, the pump 1 comprises a valve group 10, to limit on command the passage of the liquid from the delivery chamber 6 to the delivery duct 8.

In particular the valve group 10 is suitable for being positioned in an open configuration, in which the transit of liquid is permitted and in a closed configuration in which it obstructs the passage from the delivery chamber 6 to the delivery duct 8, limiting or preferably eliminating or preventing the transit of liquid from the delivery chamber 6 to the delivery duct 8. In other words, when the valve group 10 is in the closed configuration, the delivery chamber 6 is closed and the liquid remains inside it, stirred by the rotor in rotation.

In an open configuration, the valve group 10 permits the transit of a predefined quantity of liquid from the delivery chamber 6 to the delivery duct 8, Preferably, in a configuration of maximum aperture, the valve group 10 permits the transit of the greatest quantity possible of cooling liquid.

According to the present invention, the pump body 2 has a housing compartment 200 and the valve group 10 is insertable in the housing compartment and extractable therefrom, being provided with a cartridge structure.

According to a preferred embodiment, the housing compartment 200 is defined by a wall 210, which in turn has an access door 210' through which the cooling liquid is suitable to enter, delimited laterally by an access ridge 211.

According to the present invention, the valve group 10 comprises a valve body 12, formed of an element elongated along a rotation axis Y-Y, preferably of a cylindrical shape, provided with a through duct 14. In other words, the valve group 10 is structured so as to delimit by its presence a passage through which the cooling liquid is suitable to flow.

According to the present invention, the duct 14 is delimited by a plate 16 on the bottom, by side walls 18, projecting axially from the plate 16, internally moulded so as to facilitate the flow of cooling liquid therein, for example by means of the Venturi effect, and by a tubular head 20 which surmounts and joins the side walls 18 on the side opposite the plate 16.

According to the present invention, the duct 14 has in addition, at least one access mouth 14' through which the cooling liquid accesses the inside of the valve group 12 and at least one exit mouth 14" through which the cooling liquid exits from the valve group 12. The at least one access mouth 14' and the at least one exit mouth 14" are respectively delimited by an access rim 141 and an exit rim 142.

In one embodiment, the valve body 12 is made in a single piece; in further embodiments, the valve body 12 is made in two reciprocally engageable parts.

According to the present invention, the valve body 12 is provided with external seals, for example in the form of beads 22 housed in grooves provided on the outer surfaces of the side walls 18, and/or in the form of an O-ring 24 housed in a groove provided externally to the head 20 or to the plate 16.

According to the present invention, the valve group 10 comprises an obturator 30 housed in the duct 14 of the valve body 12 so as to swivel around the rotation axis Y-Y, so as to obstruct, in a closed position, the passage of liquid through the duct 14.

According to a preferred embodiment, the obturator 30 comprises an active portion 31 rotating in an offset manner in relation to the rotation axis Y-Y, suitable for assuming an open position in which it permits the passage of the liquid and a closed position in which it obstructs the passage.

In particular, the active portion 31 is suitable to sealingly engage the valve body 12 so as to stop the passage of the cooling liquid. Preferably, in fact, the active portion 31 is suitable to engage the at least one access mouth 14' so as to prevent the passage of cooling liquid between the delivery chamber 6 and delivery duct 8, thus blocking the flow of cooling liquid inside the duct 14.

Preferably, said sealed engagement between the active portion 31 and valve body 12 is achieved by means of a gasket 50, comprised in the valve group 12.

In addition, the pump 1 comprises actuation means suitable for acting on the valve group 12 and in particular on the obturator 30 to move it from the closed position to the open position and vice versa.

According to a preferred embodiment, the valve group 10 further comprises movement means suitable for permitting said interaction between the obturator 30 and actuation means. Said movement means comprise a shaft 40 having its main extension along the rotation axis Y-Y, connected to the obturator 30.

Some embodiments provide that the shaft 40 axially crosses the obturator 30 and engages with the plate 16 and with the head 20, for the swivelling support of the obturator 30. The shaft 40 in addition projects axially externally from the head 20 of the valve body 12.

Or in other embodiments, the shaft 40 is divided into two main components both connected to the obturator 30: in a head end 40', suitable for engaging with the plate 16, and in a bottom end 40", suitable for engaging with the head 20; in said embodiments internally there is therefore no shaft occupying space or influencing the flow of the cooling liquid.

Preferably, moreover, the movement means comprise a disc 42 connected to the shaft 40, in particular to the portion of it projecting from the head 20, and a pin 44, connected to the disc 42 in an eccentric position in relation to the rotation axis Y-Y.

preferably, the actuation means comprise a rod 46, provided on command, with translatory movement, connected to the pin 44 so as to swivel.

According to one embodiment variant, the rod is connected to an actuator, for example a vacuum actuator, an electromagnetic actuator, a hydraulic or pneumatic actuator, an electric actuator or the like. The translation of the rod 46 thus determines the rotation of the obturator 30.

The valve group preferably comprises in addition an oil retainer element, inserted on the shaft 40.

According to the present invention, the valve group 10 further comprises at least one anti-leakage projection 120 projecting from the valve body 12 and suitable to engage said wall 210. Preferably, said anti-leakage projection 120 projects from the valve body 12 frontally, that is to say towards the direction in which the cooling liquid flows. In other words, the anti-leakage projection 120 projects towards the delivery chamber 6.

Preferably, in fact, in an insertion configuration, in which the valve group 10 is inserted inside the housing 200 provided in the pump group 2, the anti-leakage projection 120 interferes with the wall 210 in such a way as to modify its shape and/or its spatial disposition.

Preferably, the anti-leakage projection 120 behaves elastically at least partially, assuming a modified shape by its engagement with the wall 210, and returning to its original shape when extracted from the housing 200.

Or again, the anti-leakage projection 120 behaves plastically at least partially, assuming a modified shape by its engagement with the wall 210, a shape remaining in time on account of the plastic deformation undergone.

According to a preferred embodiment, said engagement between the anti-leakage projection 120 and wall 210 is airtight, completely blocking transit.

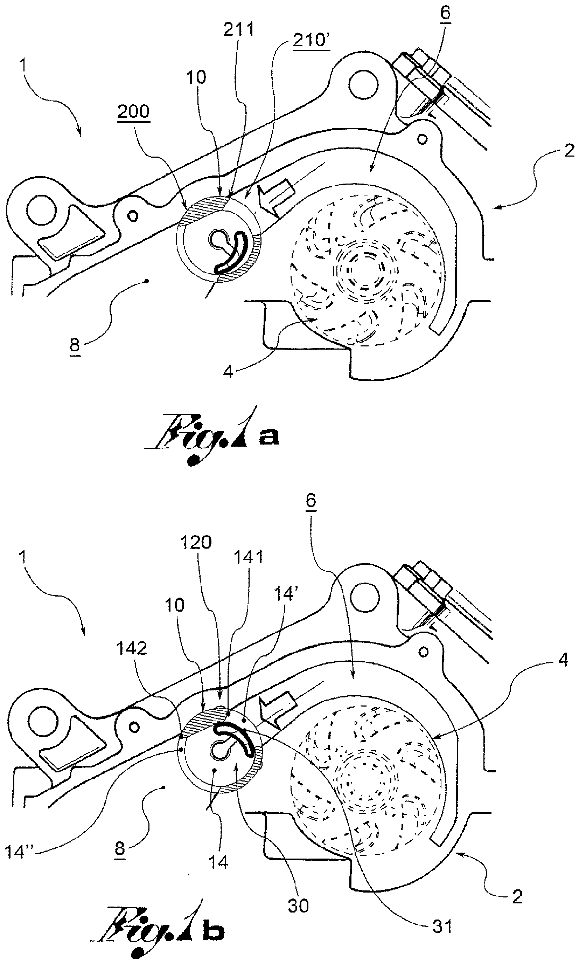

According to the present invention, the anti-leakage projection 120 is placed near the access rim 141' and the access ridge 211, so as to block the leakage of liquid at the onset. This is illustrated in fig. 1b (position of the projection indicated by reference sign 120).

Preferably, the anti-leakage projection 120 is made in one piece with the valve body 12, but in further embodiment variants, this may be an element in itself suitable for fitting or attaching to said valve body 12. Preferably, in fact, when the anti-leakage projection 120 is not made in one piece with the valve body 12 it is made from elastically yielding material, such as a silicon material or the like and is integrally connected to the valve body 12; preferably, the anti-leakage projection 120 is hot moulded to the valve body or even glued thereto, for example heat-glued or glued by means of an adhesive element, for example by means of a glue or double sided adhesive.

According to the invention, the anti-leakage projection 120 comprises a lateral projection 128 placed on a side wall 18. According to a further embodiment, the anti-leakage projection 120 comprises a lower projection 126 placed on the plate 16 and/or an upper projection 122 placed on the head 20.

According to a preferred embodiment, the anti-leakage projection 120 is an arched shape. In particular, it projects from the valve body 12 in such a way that the cross-section of the protrusion is the shape of a circular sector or, in another embodiment, a circular crown shape. For example, in the circular sector embodiment the cavity between the anti-leakage projection 120 and valve body 12 adds to the elastic characteristics of the former.

In other words, the seal between the valve body and seat is created thanks to the contact between the anti-leakage surfaces projecting from the body and relative seat.

Innovatively, the valve group object of the present invention and the cooling pump which contains it, are particularly suitable for use in the sphere of a cooling system of a vehicle, overcoming the problem of the leakage of cooling liquid between the valve group and housing.

Advantageously, the valve group obstructs the passage of cooling liquid in an efficacious manner; in particular, the valve group ensures a good seal, specifically in the reciprocal engagement between the valve body and housing minimising to the point of eliminating leakage phenomena and the unwanted transit of cooling liquid therein.

In addition, advantageously, thanks to the shape of the anti-leakage projection and to its position on the valve body, the possibility of extracting the valve group as a cartridge is in no way invalidated or reduced thereby leaving such advantageous characteristic unchanged.

According to a further advantageous aspect, the anti-leakage result between the valve group and housing may be achieved with any type of obturator, nonetheless proving fundamental, as well as extremely useful, in the configuration in which the obturator has an offset portion which interacts with an access mouth.

Further embodiments are provided moreover for such solution of engagement between the anti-leakage projection and wall: for example embodiments are provided for in which the wall has an ad hoc shape or cavity for the containment and engagement of the projection so as to create a labyrinth or coil, suitable for further complicating the passage of the cooling liquid.

It is clear that a person skilled in the art may make modifications to the valve group and to the pump described above so as to satisfy contingent requirements. The scope of protection is defined by the following claims.

## Claims

1. Valve group (10) for a pump (1) of a cooling circuit, in particular for vehicles, wherein the pump comprises a pump body (2) having a housing compartment (200) defined by a wall (210) in which said valve group (10) is insertable in an extractable manner, wherein the valve group (10) comprises a valve body (12), formed of an element elongated along a rotation axis (Y-Y), fitted with a through duct (14), and an obturator (30), housed in said duct (14), rotating around said rotation axis (Y-Y), wherein the obturator (30) is suitable for obstructing, in a closed position, the passage of liquid through the duct (14);
wherein the valve body (12) comprises a plate (16) on the bottom, side walls (18), projecting axially from the plate (16), and a tubular head (20), which surmounts and joins the side walls (18) on the side opposite the plate (16), the duct (14) through which the cooling liquid flows being defined between said side walls (18);
wherein the duct (14) has an access mouth (14') through which the cooling liquid enters the duct, defined by an access rim (141);
wherein the duct (14) has at least one exit mouth (14") through which the cooling liquid exits defined by an exit rim 142;
wherein the valve group (10) further comprises at least one anti-leakage projection (120) projecting from the valve body (12) to sealingly engage said wall (210) when the valve group is inserted in the housing compartment,
wherein the anti-leakage projection (120) comprises at least one side projection (128) placed on a side wall (18), the valve group being **characterised in that**
said anti-leakage projection (120) is closer to the access rim (141') than to the exit rim (142) .

2. Valve group (10) according to claim 1, wherein, in an insertion configuration, in which the valve group (10) is inserted inside the housing (200) in the pump group (2), the anti-leakage projection (120) interferes with the wall (210) in such a way that the shape and/or spatial disposition of the anti-leakage projection (120) is modified .

3. Valve group (10) according to claim 2, wherein the anti-leakage projection (120) is suitable to sealingly engage the valve body (12) so as to block the passage of said cooling liquid between the valve body (12) and the wall (210).

4. Valve group (10) according to any of the previous claims, wherein the at least one anti-leakage projection (120) projects from the valve body (12) upstream.

5. Valve group (10) according to any of the previous claims, wherein the anti-leakage projection (120) comprises a lower projection (126) placed on the plate (16) and/or an upper projection (122) placed on the head (20) .

6. Valve group (10) according to any of the previous claims, wherein the anti-leakage projection (120) is made in one piece with the valve body (12).

7. Valve group (10) according to any of the claims from 1 to 5, wherein the anti-leakage projection (120) is in an elastically yielding material, such as a silicon material, integrally connected to the valve body (12).

8. Valve group (10) according to any of the previous claims, wherein the anti-leakage projection (120) is an arched shape, so as to project from the valve body with a cross-section in the shape of a circular sector or in the shape of a circular crown.

9. Valve group (10) according to any of the previous claims, further comprising movement means, for moving the obturator (30), which comprise a shaft (40) connected to the obturator (30), a pin (44), eccentrically connected to the shaft (40), for example positioned on a disc (42), fixed on said shaft (40).

10. Pump (1) for a cooling circuit, in particular for vehicles, comprising a pump body (2) and a rotor (4) which aspirates cooling liquid through an aspiration section and sends said cooling liquid under pressure to a delivery section;
wherein in the pump body (2) are made a delivery chamber (6), placed downstream of the rotor (4), and a delivery duct (8) connected to the delivery chamber (6), connectable to the delivery section of the cooling circuit, comprising a valve group (10) according to any of the previous claims, wherein the housing compartment (200), containing said valve group (10), is positioned between said delivery chamber and said delivery duct (8).

11. Pump (1) according to claim 10, comprising actuation means suitable for acting on the obturator (30), comprised in the valve group (10), to take it from the closed position to the open position, in which it permits the passage of cooling liquid, and vice versa.

## Patentansprüche

1. Ventilgruppe (10) für eine Pumpe (1) eines Kühlkreislaufs, insbesondere für Fahrzeuge, wobei die Pumpe einen Pumpenkörper (2) mit einem Gehäusefach (200) umfasst, das durch eine Wand (210) definiert ist, in das die Ventilgruppe (10) auf herausziehbare Weise einsetzbar ist, wobei die Ventilgruppe (10) einen Ventilkörper (12), der aus einem entlang einer Drehachse (Y-Y) langgestreckten bzw. länglichen Element gebildet ist, das mit einem Durchgangskanal (14) versehen ist, und einen Obturator (30) umfasst, der in dem Kanal (14) untergebracht ist und sich um die Drehachse (Y-Y) dreht, wobei der Obturator (30) geeignet ist, in einer geschlossenen Position den Durchgang von Flüssigkeit durch den Kanal (14) zu blockieren;
wobei der Ventilkörper (12) eine Platte (16) an der Unterseite, Seitenwände (18), die axial von der Platte (16) vorstehen, und einen röhrenförmigen Kopf (20) umfasst, der die Seitenwände (18) auf der gegenüberliegenden bzw. entgegengesetzten Seite der Platte (16) überragt und verbindet, wobei der Kanal (14), durch den die Kühlflüssigkeit fließt, zwischen den Seitenwänden (18) definiert ist;
wobei der Kanal (14) eine Zugangsöffnung (14') aufweist, durch die die Kühlflüssigkeit in den Kanal eintritt, der durch einen Zugangsrand (141) definiert ist; wobei der Kanal (14) zumindest eine Ausgangsöffnung (14") aufweist, durch die die Kühlflüssigkeit austritt, der durch einen Austrittsrand (142) definiert ist; wobei die Ventilgruppe (10) ferner zumindest einen Anti-Leckage-Vorsprung (120) umfasst, der von dem Ventilkörper (12) vorsteht, um die Seitenwand (210) dichtend in Eingriff zu nehmen, wenn die Ventilgruppe in das Gehäusefach eingesetzt ist, wobei der Anti-Leckage-Vorsprung (120) zumindest einen Seitenvorsprung (128) umfasst, der an einer Seitenwand (18) platziert ist, wobei die Ventilgruppe **dadurch gekennzeichnet ist, dass** der Anti-Leckage-Vorsprung (120) näher an dem Zugangsrand (141') als an dem Ausgangsrand (142) ist.

2. Ventilgruppe (10) nach Anspruch 1, wobei in einer Einsetzkonfiguration, in der die Ventilgruppe (10) innerhalb des Gehäuses (200) in der Pumpengruppe (2) eingesetzt ist, der Anti-Leckage-Vorsprung (120) sich derart mit der Wand (210) beeinträchtigt, dass die Form und/oder räumliche Anordnung des Anti-Leckage-Vorsprungs (120) modifiziert wird.

3. Ventilgruppe (10) nach Anspruch 2, wobei der Anti-Leckage-Vorsprung (120) geeignet ist, den Ventilkörper (12) dichtend in Eingriff zu nehmen, um den Durchtritt der Kühlflüssigkeit zwischen dem Ventilkörper (12) und der Wand (210) zu blockieren.

4. Ventilgruppe (10) nach einem der vorhergehenden Ansprüche, wobei der zumindest eine Anti-Leckage-Vorsprung (120) stromabwärts des Ventilkörpers (12) vorsteht.

5. Ventilgruppe (10) nach einem der vorhergehenden Ansprüche, wobei der Anti-Leckage-Vorsprung (120) einen unteren Vorsprung (126), der an der Platte (16) platziert ist, und/der einen oberen Vorsprung (122) umfasst, der an dem Kopf (20) platziert ist.

6. Ventilgruppe (10) nach einem der vorhergehenden Ansprüche, wobei der Anti-Leckage-Vorsprung (120) einstückig mit dem Ventilkörper (12) ausgebildet ist.

7. Ventilgruppe (10) nach einem der Ansprüche 1 bis 5, wobei der Anti-Leckage-Vorsprung (120) aus einem elastisch nachgiebigen Material besteht, beispielsweise einem Silikonmaterial, das integral mit dem Ventilkörper (12) verbunden ist.

8. Ventilgruppe (10) nach einem der vorhergehenden Ansprüche, wobei der Anti-Leckage-Vorsprung (120) eine gewölbte Form aufweist, um von dem Ventilkörper mit einem Querschnitt in der Form eines Kreissektors oder in der Form einer kreisförmigen Krone vorzustehen.

9. Ventilgruppe (10) nach einem der vorhergehenden Ansprüche, ferner umfassend Bewegungsmittel zum Bewegen des Obturators (30), die eine mit dem Obturator (30) verbundene Welle (40), einen Stift (44) umfassen, der exzentrisch mit der Welle (40) verbunden ist, beispielsweise an einer Scheibe (42) positioniert, fixiert bzw. befestigt an der Welle (40).

10. Pumpe (1) für einen Kühlkreislauf, insbesondere für Fahrzeuge, umfassend einen Pumpenkörper (2) und einen Rotor (4), der Kühlflüssigkeit durch einen Ansaugabschnitt ansaugt und die Kühlflüssigkeit unter Druck einem Lieferabschnitt zuführt;
wobei in dem Pumpenkörper (2) eine Abgabe- bzw. Lieferkammer (6), die stromabwärts des Rotors (4) platziert ist, und ein Abgabe- bzw. Lieferkanal (8) gemacht sind, der mit der Lieferkammer (6) verbunden ist, die mit dem Lieferabschnitt des Kühlkreislaufs verbindbar ist bzw. sind, umfassend eine Ventilgruppe (10) nach einem der vorhergehenden Ansprüche, wobei das Gehäusefach (200), das die Ventilgruppe (10) enthält, zwischen der Lieferkammer und dem Lieferkanal (8) positioniert ist.

11. Pumpe (1) nach Anspruch 10, umfassend Betätigungsmittel, die geeignet sind, auf den in der Ventilgruppe (10) enthaltenen Obturator (30) zu wirken, um ihn aus der geschlossenen Position in die offene Position, in der er den Durchtritt von Kühlflüssigkeit erlaubt, und umgekehrt zu bringen.

## Revendications

1. Groupe de vannes (10) pour une pompe (1) d'un circuit de refroidissement, en particulier pour des véhicules, dans lequel la pompe comprend un corps de pompe (2) ayant un compartiment de logement (200) défini par une paroi (210) dans lequel ledit groupe de vannes (10) est inséré de manière extractible, dans lequel le groupe de vannes (10) comprend un corps de vanne (12), composé d'un élément allongé le long d'un axe de rotation (Y-Y), équipé d'une conduite traversante (14), et d'un obturateur (30), logé dans ladite conduite (14), tournant autour dudit axe de rotation (Y-Y), dans lequel l'obturateur (30) est adapté à obstruer, en position fermée, le passage de liquide à travers la conduite (14) ;
dans lequel le corps de vanne (12) comprend une plaque (16) sur le fond, des parois latérales (18), faisant saillie axialement depuis la plaque (16), et une tête tubulaire (20), qui dépasse et rejoint les parois latérales (8) sur le côté opposé à la plaque (16), la conduite (14) à travers laquelle le liquide de refroidissement s'écoule étant définie entre lesdites parois latérales (18) ;
dans lequel la conduite (14) a un orifice d'accès (14') à travers lequel le liquide de refroidissement pénètre dans la conduite, défini par un bord d'accès (141) ;
dans lequel la conduite (14) a au moins un orifice de sortie (14") à travers lequel le liquide de refroidissement sort, défini par un bord de sortie (142) ;
dans lequel le groupe de vannes (10) comprend en outre au moins une saillie antifuite (120) faisant saillie depuis le corps de vanne (12) pour venir en prise de manière étanche avec ladite paroi (210) lorsque le groupe de vannes est inséré dans le compartiment de logement,
dans lequel la saillie antifuite (120) comprend au moins une saillie latérale (128) placée sur une paroi latérale (18),
le groupe de vannes étant **caractérisé en ce que**
ladite saillie antifuite (120) est plus proche du bord d'accès (141') que du bord de sortie (142).

2. Groupe de vannes (10) selon la revendication 1, dans lequel, dans une configuration d'insertion, dans laquelle le groupe de vannes (10) est inséré à l'intérieur du logement (200) dans le groupe de pompes (2), la saillie antifuite (120) empiète sur la paroi (210) de sorte que la forme et/ou la disposition spatiale de la saillie antifuite (120) soit modifiée.

3. Groupe de vannes (10) selon la revendication 2, dans lequel la saillie antifuite (120) est appropriée pour mettre en prise de manière étanche le corps de vanne (12) de manière à bloquer le passage dudit fluide de refroidissement entre le corps de vanne (12) et la paroi (210).

4. Groupe de vannes (10) selon l'une quelconque des revendications précédentes, dans lequel l'au moins une saillie antifuite (120) fait saillie depuis le corps de vanne (12) en amont.

5. Groupe de vannes (10) selon l'une quelconque des revendications précédentes, dans lequel la saillie antifuite (120) comprend une saillie inférieure (126) placée sur la plaque (16) et/ou une saillie supérieure (122) placée sur la tête (20).

6. Groupe de vannes (10) selon l'une quelconque des revendications précédentes, dans lequel la saillie antifuite (120) est fabriquée en une seule pièce avec le corps de vanne (12).

7. Groupe de vannes (10) selon l'une quelconque des revendications 1 à 5, dans lequel la saillie antifuite (120) est composée d'un matériau souple élastique, tel qu'un matériau de silicium, connecté intégralement au corps de vanne (12).

8. Groupe de vannes (10) selon l'une quelconque des revendications précédentes, dans lequel la saillie antifuite (120) présente une forme arquée, de manière à faire saillie depuis le corps de vanne avec une section transversale en forme d'un secteur circulaire ou en forme d'une couronne circulaire.

9. Groupe de vannes (10) selon l'une quelconque des revendications précédentes, comprenant en outre des moyens de déplacement, pour déplacer l'obturateur (30), qui comprennent un arbre (40) connecté à l'obturateur (30), une broche (44), connectée de manière excentrique à l'arbre (40), par exemple positionnée sur un disque (42), fixé sur ledit arbre (40).

10. Pompe (1) pour un circuit de refroidissement, en particulier pour des véhicules, comprenant un corps de pompe (2) et un rotor (4) qui aspire un liquide de refroidissement à travers une section d'aspiration et envoie ledit liquide de refroidissement sous pression à une section de distribution ;
dans laquelle dans le corps de pompe (2) sont fabriquées une chambre de distribution (6), placée en aval du rotor (4), et une conduite de distribution (8) connectée à la chambre de distribution (6), pouvant être connectée à la section de distribution du circuit de refroidissement, comprenant un groupe de vannes (10) selon l'une quelconque des revendications précédentes, dans laquelle le compartiment de logement (200), contenant ledit groupe de vannes (10), est positionné entre ladite chambre de distribution et ladite conduite de distribution (8).

11. Pompe (1) selon la revendication 10, comprenant des moyens d'actionnement adaptés à actionner l'obturateur (30), compris dans le groupe de vannes (10), pour l'amener de la position fermée à la position ouverte, dans laquelle il permet le passage de liquide de refroidissement, et vice versa.
